# EUROPEAN PATENT APPLICATION

(11) **EP 2 228 794 A1**
(43) Date of publication of application: **15.09.2010**
(21) Application number: 09305224.9
(22) Date of filing: 11.03.2009
(51) Int. Cl.: G11B 7/007, G11B 7/24

(54) **Hybrid read-only and recordable optical recording medium**

(71) Applicant: Thomson Licensing SA, 92130 Issy-les-Moulineaux (FR)
(72) Inventor: Khrushchev, Sergey, 78089 Unterkirnach (DE); Krause, Michael, 78050 Villingen-Schwenningen (DE); Knappmann, Stephan, 78658 Zimmern ob Rottweil (DE)
(74) Representative: Schmidt-Uhlig, Thomas

(57) **Abstract**

The present invention relates to a hybrid optical recording medium (8) having at least one read-only area (84) and at least one recordable area (83). The invention further relates to a method and an apparatus for producing such a hybrid optical recording medium (8).

The recordable area (83) has a guide structure (81) and is a low-to-high or a high-to-low recordable area (83). The reflectivity of the read-only area (84) matches the reflectivity of the recordable area (83) in its recorded state.

## Description

The present invention relates to a hybrid optical recording medium having at least one read-only area and at least one recordable area. More specifically, the invention relates to a hybrid optical recording medium with an improved playability.

For a plurality of applications it is desirable to have an optical recording medium having both a read-only area as well as a recordable area. Such optical recording media are known as hybrid optical recording media. A typical application for hybrid optical recording media is retail activation. For this application an essential part of the data is missing on the optical recording medium. The missing data are recorded at the point of sale when the optical recording medium is purchased. Other applications are optical recording media for software, which include a special area for storing software updates, or optical recording media with pre-recorded audio or video data, which can be extended with further purchased audio or video data.

For example, US 2003/0021942 discloses a hybrid optical recording medium having a ROM area and a recordable area. Several organic dye materials are proposed for the recording layer for achieving good reproduction properties of the optical recording medium.

Also, US 2003/0007447 discloses a hybrid optical recording medium having a ROM area and a recordable area. In order to achieve signals that meet standard specifications, grooves of the recordable area have a special extended shape.

As an alternative to meet standard specifications, US 2006/0039268 describes a recordable optical recording medium having a low-to-high recording layer stack, i.e. a recording layer stack whose reflectivity increases during recording. The recording layer stack is designed such that its reflectivities in the unrecorded state and in the recorded state both are in a reflectivity range specified for a conventional recordable optical recording medium. The described optical recording medium is, however, not a hybrid optical recording medium.

Though many applications exist for hybrid optical recording media, problems may occur when such a hybrid optical recording medium is played back in an optical drive designed for non-hybrid optical recording media, i.e. for read-only optical recording media or recordable optical recording media. Many optical disk drives stop playback when a transition from the read-only area to the recordable area or vice versa takes place.

It is thus an object of the invention to propose a hybrid optical recording medium with an improved playability.

According to the invention, this object is achieved by an optical recording medium with at least a read-only area and a recordable area having a guide structure, wherein the recordable area is a low-to-high or a high-to-low recordable area, and wherein the reflectivity of the read-only area matches the reflectivity of the recordable area in its recorded state.

Writing tests with hybrid optical recording media with a PdOTe-layer stack have shown that the reflectivity (for example at 650 nm) in the recordable area is much lower than the reflectivity in the read-only area of the optical recording medium. It has been found that the reduced reflectivity is caused by the diffraction of the light by the guide structure in the recordable area, which is needed for tracking. Typically, the guide structure consists of a plurality of grooves. As defined, for example, in Standard ECMA-337: *"Data Interchange on 120 mm and 80 mm Optical Disk using +RW Format - Capacity: 4,7 and 1,46 Gbytes per Side",* a groove is a trench-like feature of the optical recording medium, applied before the recording of any information, and used to define the track location. The groove is located nearer to the entrance surface than the land in between the grooves. The resulting reflectivity depends on the geometry of the guide structure. A significant part of the reflected light, namely first and higher order diffracted light, does not reach the detector used for obtaining the data signal. The reflectivity difference is even larger after recording when a high-to-low recording layer stack is used, i.e. a recording layer stack whose reflectivity decreases during recording. Typically after high-to-low recording not only the average reflectivity is reduced, but also the maximum reflectivity R14H (for DVD), which is the relevant specification parameter for the playability. The high reflectivity difference between the recorded zone (R14H-recorded) and the read-only area (R14H-prerecorded) of the optical recording medium disrupts the playability of the optical recording medium on most standard players.

According to the invention, this problem is overcome by designing the read-only area and the recordable area in such way that the reflectivity of the read-only area matches the reflectivity of the recordable area in its recorded state. Advantageously, the reflectivities are substantially equal. However, it is also possible to experimentally determine a maximum tolerable difference in reflectivity, which ensures playability in most players.

In the context of the present invention the adjustment of the reflectivity values for the read-only area and the recordable area is always related to the corresponding parameter R14H (R14H-pre-recorded, R14H-recorded). It should be noted that the reflectivity increase in a low-to-high layer stack during recording is usually much higher than the typical reflectivity decrease during recording of a high-to-low layer stack, which in some cases is negligible. This is because the R14H level is defined by the recorded areas in the case of a low-to-high layer stack and by the unrecorded areas in the case of a high-to-low layer stack.

According to one aspect of the invention, both the recordable area and the read-only area have an identical low-to-high recording layer stack.

The use of a low-to-high recording layer stack results in an increase of the reflectivity during recording. The reflectivity and modulation of the recording layer stack are tuned such that the reflectivity increase compensates for the difference in reflectivity between the read-only area and the recordable area caused by the geometry of the substrate, i.e. the guide structure. Therefore, after recording the read-only area and the recordable area have substantially the same reflectivity. This can be achieved with a number of different recording materials. An exemplary layer stack for implementing the invention comprises an AgSb-layer or a GeSbTe-layer. This AgSb-layer or GeSbTe-layer is advantageously sandwiched between an upper and a lower ZnS-Si02-dielectric layer. Good results are obtained when the AgSb-layer has a thickness of around 16nm, the lower ZnS-SiO2-dielectric layer has a thickness of around 60nm, and the upper ZnS-Si02-dielectric layer has a thickness between 10nm and 150nm, preferably around 108nm. Good results are also obtained when the GeSbTe-layer has a thickness of around 9nm, the lower ZnS-Si02-dielectric layer has a thickness of around 80nm, and the upper ZnS-Si02-dielectric layer has a thickness between 0nm and 140nm. As an additional advantage, manufacturing of such a hybrid optical recording medium is simplified, as the whole surface of the optical recording medium is provided with the same layer stack. The layer stack is preferably applied by sputtering or coating.

According to a further aspect of the invention, both the recordable area and the read-only area have an identical high-to-low recording layer stack, the recording layer stack in the read-only area being in a partly recorded state.

By applying a high-to-low recording layer stack to the read-only area of the hybrid optical recording medium the reflectivity of this area becomes adjustable, e.g. by laser irradiation or by illumination with a high-power light source. It is thus possible to reduce the reflectivity of the read-only area such that it matches the reflectivity of the recordable area after recording. Again, manufacturing of such a hybrid optical recording medium is simplified, as the whole surface of the optical recording medium is provided with the same layer stack.

According to still a further aspect of the invention, the read-only area only has a reflective layer and the recordable area has a low-to-high recording layer stack or a high-to-low recording layer stack, whose reflectivity in its recorded state matches the reflectivity of the reflective layer.

By using a mask during sputtering it is possible to apply different layer stacks to different areas of the optical recording medium. Preferably, the low-to-high or high-to-low recording layer stack is only applied to the recordable area, whereas the remainder of the substrate is covered only by a reflective layer. This allows to independently adjust the reflectivity of the two different areas. The adjustment is advantageously achieved, for example, by varying the thickness of the reflective layer and/or by designing the recording layer stack such that the two reflectivities match after recording. The adjustment of the reflectivities enables to compensate for the reflectivity difference between the read-only area and the recordable area caused by the substrate.

According to another aspect of the invention, both the recordable area and the read-only area have an identical high-to-low recording layer stack, the read-only area further having a diffractive structure.

The reflectivity of the recordable area is reduced by two different effects, namely the diffraction caused by the guide structure of the substrate, e.g. a groove structure, and the reflectivity loss caused by recording, as R14H-recorded is different from the reflectivity in the unrecorded groove. As an alternative to the irradiation of the read-only area as described above a diffractive structure is applied to the read-only area, i.e. the substrate geometry is adjusted. This likewise makes it possible to compensate for those reflectivity differences. Advantageously, the diffractive structure has grooves arranged in lands between marks of the read-only area, i.e. an additional groove structure is added in the land region between the marks. The groove geometry is designed to lower the reflectivity based on diffraction effects similar to the diffraction effects in the recordable area. For such a hybrid optical recording medium mastering is advantageously performed with two beams. Of course, it is also possible to provide the diffractive structure in addition to the irradiation of the read-only area, as the irradiation of the read-only area might in some cases not be sufficient or suitable to reduce the reflectivity of the read-only area to match the reflectivity of the recordable area.

In addition, the use of a diffractive structure in the read-only area is not limited to the case of the read-only area having a high-to-low recording layer stack. The diffractive structure is advantageously also applied to the read-only area when the read-only area only has a reflective layer, or when the read-only area has a low-to-high recording layer stack. More generally, the diffractive structure is applicable irrespective of the choice of the specific design of the recordable area and the read-only area.

Favorably, the recordable area and the read-only area have different high-to-low or low-to-high recording layer stacks, whose reflectivities in their recorded states match.

By providing the read-only area and the recordable area with different layer stacks the flexibility of tuning the reflectivity of both areas is further increased. For example, the reflectivity of the read-only area is reduced or increased by a certain amount by irradiation, while the reflectivity of the recordable area is reduced or increased by recording data in the recordable area. Sign and amount of both reflectivity changes are tuned independently from each other by the appropriate choice of the recording layer stacks in order to have matching reflectivities once the irradiation and recording processes are finished. Such a hybrid optical recording medium is preferably manufactured using masks during a sputtering process.

Advantageously, the guide structure of the recordable area is designed such that the reduction of reflectivity caused by diffraction at the guide structure is reduced. Experiments have shown that adjustments of the groove geometry allow to modify the diffraction effects. This can be used for minimizing the change of reflectivity caused by the diffractive structure of the recordable area. For example, in case of a DVD-like medium, which is read at a wavelength of 650nm, the grooves have a particularly small width, e.g. 100nm, and a low depth, e.g. 40nm. In any case, this possibility is limited by the fact that the push-pull signal needs to be large enough for tracking during the recording process.

According to another aspect of the invention, a method for producing an optical recording medium with at least a read-only area and a recordable area having a guide structure has the steps of:
- providing the read-only area with a high-to-low or a low-to-high recording layer stack and/or the recordable area with a low-to-high recording layer stack; and
- transforming the high-to-low or the low-to-high recording layer stack of the read-only area and/or the low-to-high recording layer stack of a land area located between grooves of the recordable area into its recorded state.

Similarly, an apparatus for producing an optical recording medium with at least a read-only area and a recordable area having a guide structure has:
- means for providing the read-only area with a high-to-low or a low-to-high recording layer stack; and
- means for transforming the high-to-low or the low-to-high recording layer stack of the read-only area and/or the low-to-high recording layer stack of a land area located between grooves of the of the recordable area into its recorded state.

Preferably, the means for providing the read-only area with a high-to-low or a low-to-high recording layer stack is a sputtering system or a coating system. Such systems are well known in the art and can easily be integrated in a manufacturing system.

Advantageously, the means for transforming the high-to-low or the low-to-high recording layer stack of the read-only area and/or the low-to-high recording layer stack of a land area located between grooves of the of the recordable area into its recorded state is a laser or a high-power light source.

During production the read-only area is provided with a high-to-low or a low-to-high recording layer stack. Alternatively or in addition, the recordable area is provided with a low-to-high recording layer stack. Subsequently the high-to-low or the low-to-high recording layer stack of the read-only area is transformed into a recorded state. In this way the reflectivity of the read-only area is modified so that it matches the reflectivity of the recordable area.

Further, it is useful to increase the land reflectivity between the grooves in which the marks are recorded. This allows to get a high reflectivity of the land and a low average reflectivity along the recorded groove like it is present in the prerecorded areas. Then the track cross signal is the same as for a standard pre-recorded optical recording medium, e.g. a DVD-ROM. In practice the high land reflectivity is easily achieved by a focused laser beam with a constant power at the recording power level.

Favorably, the method further has the step of providing the read-only area with a diffractive structure. This is preferably done during mastering, e.g. using two mastering beams. The diffractive structure also allows to modify the reflectivity of the read-only area. It is thus suitable for matching the reflectivities of the read-only area and the recordable area. Of course, it is also possible to provide the diffractive structure in the read-only area instead of the high-to-low or the low-to-high recording layer stack.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: schematically depicts an apparatus for reading from and/or writing to a hybrid optical recording medium,

- Fig. 2: illustrates the detector image caused by the generation of first order diffraction by a groove structure,
- Fig. 3: shows a prior art hybrid optical recording medium before recording,
- Fig. 4: depicts the hybrid optical recording medium of Fig. 3 after recording,
- Fig. 5: depicts a first hybrid optical recording medium according to the invention before recording,
- Fig. 6: shows the hybrid optical recording medium of Fig. 5 after recording,
- Fig. 7: illustrates a second hybrid optical recording medium according to the invention before recording,
- Fig. 8: shows the hybrid optical recording medium of Fig. 7 after recording,
- Fig. 9: schematically depicts a diffractive structure for the read-only area of the hybrid optical recording medium according to the invention,
- Fig. 10: shows a top view of the hybrid optical recording medium of Fig. 9, and
- Fig. 11: illustrates an apparatus for producing the hybrid optical recording medium according to the invention.

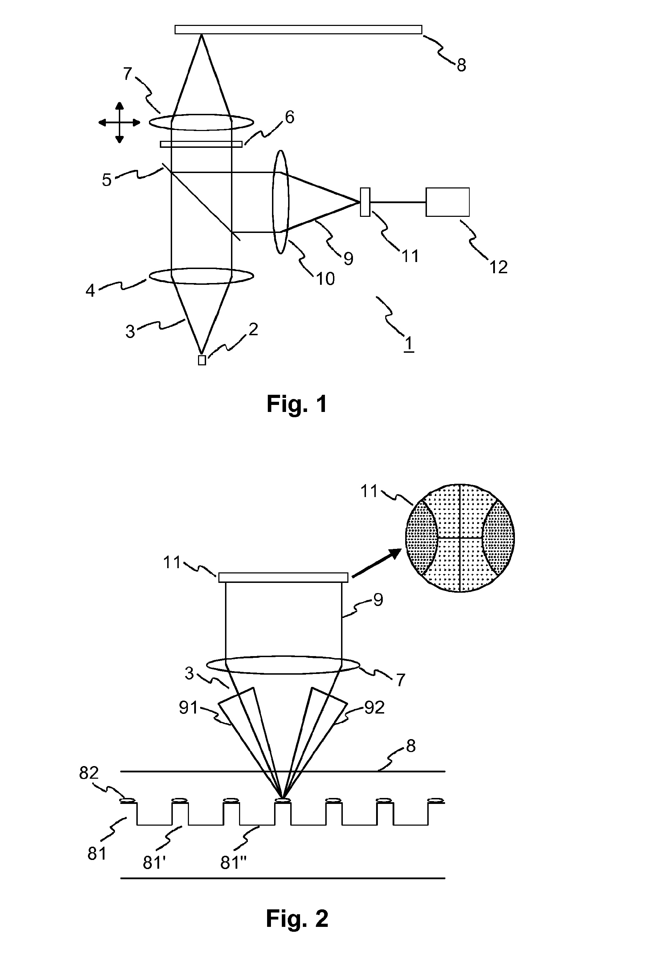

In Fig. 1 an apparatus 1 for reading from and/or writing to a hybrid optical recording medium 8 having a read-only area and a recordable area is shown schematically. The recordable area of the hybrid optical recording medium 8 is provided with a guide structure for tracking, usually with a groove structure. A laser diode 2 emits a linearly polarized light beam 3, which is collimated by a collimator lens 4. The collimated light beam 3 passes a polarization beam splitter 5 and a quarter wave plate 6, which transforms the light beam 3 into a circular polarized light beam 3, before it is focused onto an optical recording medium 8 by an objective lens 7. The light beam 9 reflected by the optical recording medium 8 is collimated by the objective lens 7 and passes the quarter wave plate 6, which transforms the reflected light beam 9 into a linear polarized light beam 9. Due to the quarter wave plate 6, the direction of polarization of the reflected light beam 9 is perpendicular to the direction of polarization of the initial light beam 3. The reflected light beam 9 is thus deflected by the polarization beam splitter 5 towards a focusing lens 10, which focuses the reflected light beam 9 onto a detector 11. An evaluation circuitry 12 evaluates the signals obtained by the detector 11.

During reading the groove structure of the recordable area leads to the generation of first order diffraction. The resulting detector image is illustrated in Fig. 2. The hybrid optical recording medium 8 has a groove structure 81 consisting of grooves 81' and lands 81" and a plurality of recorded marks 82. The marks 82 are not necessarily located in the grooves 81' (groove recording). They may likewise be located in the lands 81" (land recording) or in the gooves 81' and the lands 81" (land-groove recording). Upon illumination of the groove structure 81 with the reading light beam 3 ±first order diffracted light beams 91, 92 are generated in addition to the reflected zeroth order light beam 9. These ±first order diffracted light beams 91, 92 are used for Push-Pull tracking in the recordable area. All reflected light beams 9, 91, 92 are collimated by the objective lens 7 and impinge on the detector 11. The superposition of the reflected light beams 9, 91, 92 on the detector 11 leads to the detector image 20 illustrated in the top right corner of Fig. 2. The groove structure 81 thus leads to a reduced reflectivity of the recordable area.

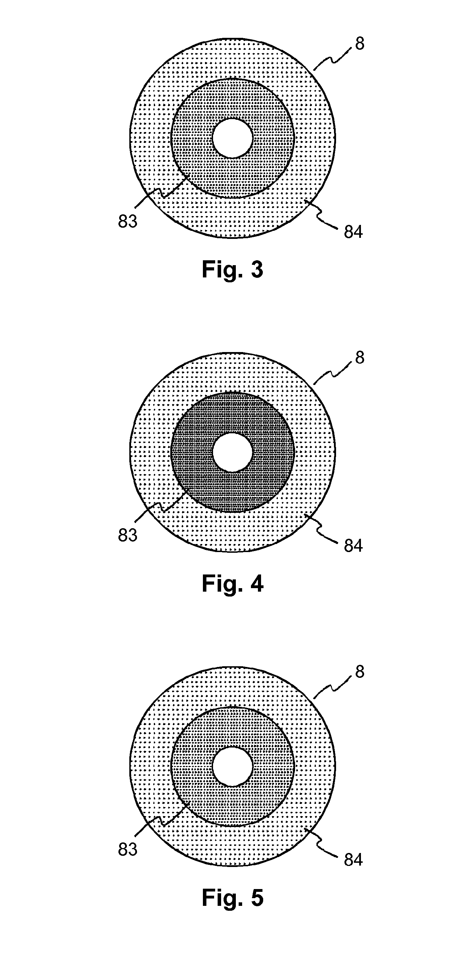

Fig. 3 depicts a sketch of a known hybrid optical recording medium 8 with a recordable area 83 on the inside and a read-only area 84 at the outside of the optical recording medium 8 before recording. Fig. 4 depicts the hybrid optical recording medium 8 of Fig. 3 after recording. The recordable area 83 has a high-to-low recording layer stack. Before recording the reflectivity in the recordable area 83 is lower than the reflectivity in the read-only area 84 due to the diffraction caused by the groove structure 81. This is schematically illustrated by the density of the dots in the recordable area 83 and the read-only area 84, where a higher density denotes a lower reflectivity. As can be seen from Fig. 4, after recording the high-to-low layer stack the reflectivity difference between the two areas 83, 84 is even larger.

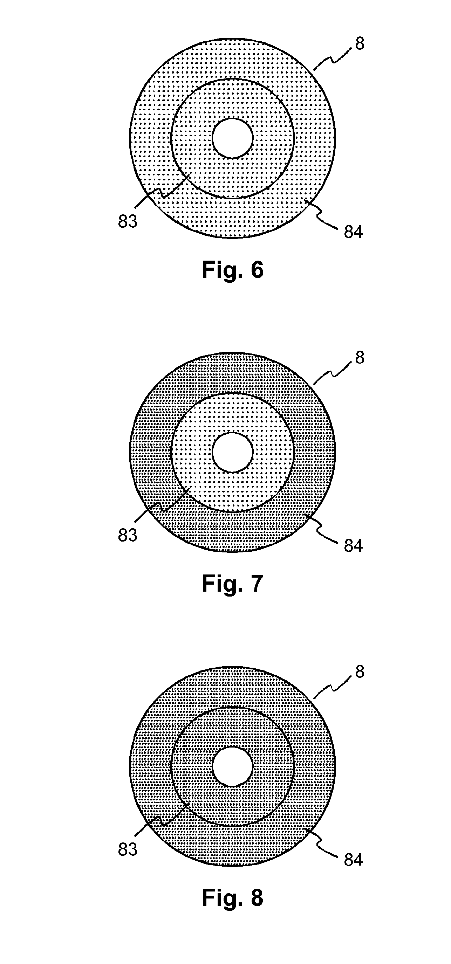

In Fig. 5 a first hybrid optical recording medium 8 according to the invention is schematically illustrated before recording. Fig. 6 shows the hybrid optical recording medium of Fig. 5 after recording. Again the hybrid optical recording medium 8 has a recordable area 83 on the inside and a read-only area 84 at the outside. In this case, however, the recordable area 83 is provided with a specially tuned low-to-high recording layer stack. The read-only area 84 is provided with only a reflective layer, with the same low-to-high recording layer stack, or with a different low-to-high or high-to-low recording layer stack. In the latter cases the recording layer stack of the read-only area is in the recorded state. The read-only area 84 may further be provided with a diffractive structure (not shown). Before recording the reflectivity in the recordable area 83 is lower than the reflectivity in the read-only area 84 due to the diffraction caused by the groove structure. As can be seen from Fig. 6, if the modulation of the recording layer stack(s) is tuned correctly, after recording the reflectivity increase in the recordable area 83 caused by the recording compensates for this reflectivity difference.

A second hybrid optical recording medium 8 according to the invention is schematically illustrated in Fig. 7 before recording and Fig. 8 after recording. The hybrid optical recording medium 8 has a recordable area 83 on the inside and a read-only area 84 at the outside. In this case, however, the recordable area 83 is provided with a specially tuned high-to-low recording layer stack. The read-only area 84 is provided with only an adapted reflective layer, with the same high-to-low recording layer stack, or with a different low-to-high or high-to-low recording layer stack. In the latter cases the recording layer stack of the read-only area is in the recorded state. The read-only area 84 may further be provided with a diffractive structure (not shown). Before recording the reflectivity in the recordable area 83 is higher than the reflectivity in the read-only area 84 despite the diffraction caused by the groove structure. This is achieved by the adapted reflective layer of the read-only area or by the transformation of the recording layer stack of the read-only area into the recorded state. As can be seen from Fig. 8, if the modulation of the recording layer stack(s) is tuned correctly, after recording the reflectivity decrease in the recordable area 83 caused by the recording compensates for this reflectivity difference.

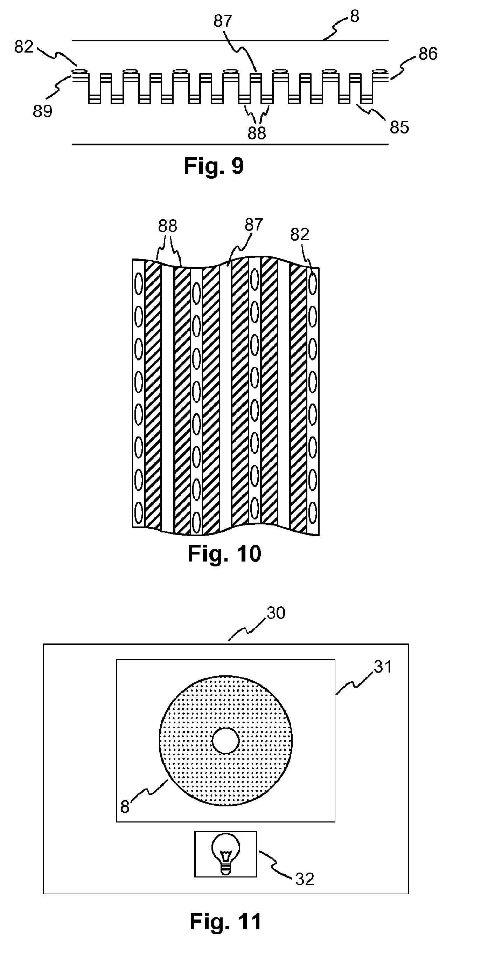

A cross-section of a hybrid optical recording medium 8 having a diffractive structure 85 in the read-only area 84 is schematically depicted in Fig. 9. A top view of this hybrid optical recording medium 8 is shown in Fig. 10. The diffractive structure 85 has a plurality of additional grooves 87, which are located in the land area 88 between the pre-recorded marks 82 of the read-only area 84. Also illustrated is a reflective layer 86 and the recording layer stack 89 (low-to-high or high-to-low) arranged on the diffractive structure 85. The choice of the recording layer stack 89, the groove depth and width, and the selection of the thickness and material of the reflective layer 86 allows to influence the reflectivity of the read-only area 84.

The above figures illustrate only a simplified situation. In practice the reflectivity values R14H-pre-recorded and R14H-recorded need to be adjusted.

An apparatus 30 for producing a hybrid optical recording medium 8 according to the invention is illustrated schematically in Fig. 11. The apparatus 30 includes a system 31 for providing the read-only area 84 of the optical recording medium 8 with a high-to-low or a low-to-high recording layer stack 89 and/or the recordable area 83 of the optical recording medium 8 with a low-to-high recording layer stack. Favorably, the system 30 is a sputtering system or a coating system. In addition, the apparatus also includes a light source 32 for transforming the high-to-low or the low-to-high recording layer stack 89 of the read-only area 84 and/or the low-to-high recording layer stack 89 of the land area 81" located between the grooves 81' of the recordable area 83 into its recorded state. The light source 32 advantageously is a laser or a high-power light source.

## Claims

1. Optical recording medium (8) with at least a read-only area (84) and a recordable area (83) having a guide structure (81), **wherein** the recordable area (83) is a low-to-high or a high-to-low recordable area (83), and wherein the reflectivity of the read-only area (84) matches the reflectivity of the recordable area (83) in its recorded state.

2. Optical recording medium (8) according to claim 1, **wherein** both the recordable area (83) and the read-only area (84) have an identical low-to-high recording layer stack (89).

3. Optical recording medium (8) according to claim 1, **wherein** both the recordable area (83) and the read-only area (84) have an identical high-to-low recording layer stack (89), and wherein the recording layer stack (89) in the read-only area (84) is in a partly recorded state.

4. Optical recording medium (8) according to claim 3, **wherein** the read-only area (84) further has a diffractive structure (85).

5. Optical recording medium (8) according to claim 1, **wherein** both the recordable area (83) and the read-only area (84) have an identical high-to-low recording layer stack (89), and wherein the read-only area (84) further has a diffractive structure (85).

6. Optical recording medium (8) according to claim 4 or 5, **wherein** the diffractive structure (85) has grooves (87) arranged in lands (88) between marks (82) of the read-only area (84).

7. Optical recording medium (8) according to claim 1, **wherein** the read-only area (84) only has a reflective layer (86) and the recordable area (83) has a low-to-high recording layer stack (89) or a high-to-low recording layer stack (89), whose reflectivity in its recorded state matches the reflectivity of the reflective layer (86).

8. Optical recording medium (8) according to claim 7, **wherein** the read-only area (84) further has a diffractive structure (85).

9. Optical recording medium (8) according to claim 1, **wherein** the recordable area (83) and the read-only area (84) have different high-to-low or low-to-high recording layer stacks (89), whose reflectivities in their recorded states match.

10. Optical recording medium (8) according to one of claims 1 to 9, **wherein** the guide structure (81) of the recordable area (83) is designed such that the reduction of reflectivity caused by diffraction at the guide structure (81) is reduced.

11. Method for producing an optical recording medium (8) with at least a read-only area (84) and a recordable area (83) having a guide structure (81), **having** the steps of:
- providing the read-only area (84) with a high-to-low or a low-to-high recording layer stack (89) and/or the recordable area (83) with a low-to-high recording layer stack (89); and
- transforming the high-to-low or the low-to-high recording layer stack (89) of the read-only area (84) and/or the low-to-high recording layer stack (89) of a land area (81") located between grooves (81') of the recordable area (83) into its recorded state.

12. Method according to claim 11, **further** having the step of providing the read-only area (84) with a diffractive structure (85).

13. Apparatus (30) for producing an optical recording medium (8) with at least a read-only area (84) and a recordable area (83) having a guide structure (81), **having:**
- means (31) for providing the read-only area (84) with a high-to-low or a low-to-high recording layer stack (89); and
- means (32) for transforming the high-to-low or the low-to-high recording layer stack (89) of the read-only area (84) and/or the low-to-high recording layer stack (89) of a land area (81") located between grooves (81') of the recordable area (83) into its recorded state.

14. Apparatus (30) according to claim 13, **wherein** the means (31) for providing the read-only area (84) with a high-to-low or a low-to-high recording layer stack (89) is a sputtering system or a coating system.

15. Apparatus (30) according to claim 13 or 14, **wherein** the means (32) for transforming the high-to-low or the low-to-high recording layer stack (89) of the read-only area (84) and/or the low-to-high recording layer stack (89) of the land area (81") located between grooves (81') of the recordable area (83) into its recorded state is a laser or a high-power light source.
